# EUROPEAN PATENT APPLICATION

(11) **EP 4 776 603 A1**
(43) Date of publication of application: **15.07.2026**
(21) Application number: 24870690.5
(22) Date of filing: 24.09.2024
(51) Int. Cl.: H04L 69/18

(54) **PROTOCOL STACK ARCHITECTURE, PROTOCOL STACK DATA PROCESSING METHOD, ELECTRONIC DEVICE, AND STORAGE MEDIUM**

(30) Priority: 27.09.2023 CN 202311287497
(71) Applicant: ZTE CORPORATION, Shenzhen, Guangdong 518057 (CN)
(72) Inventor: HE, Peng, Shenzhen, Guangdong 518057 (CN)
(74) Representative: Canzler & Bergmeier Patentanwälte Partnerschaft mbB
(86) International application number: PCT/CN2024/120637
(87) International publication number: WO 2025/067146

(57) **Abstract**

Embodiments of the present disclosure provide a protocol stack architecture, a protocol stack data processing method, an electronic device, and a storage medium. The protocol stack architecture comprises: an application layer, configured to configure protocol information and/or link information and monitor data reception of a link layer; a protocol layer, configured to extract first valid data of a received data frame on the basis of the configured protocol information, wherein the first valid data is data needing to be transmitted; a parsing layer, configured to parse the first valid data and store and/or forward the parsed first valid data; and the link layer, configured to manage link control information of a communication link and receive data on the basis of the configured link information.

## Description

### CROSS-REFERENCE TO RELATED APPLICATIONS

This application claims the priority to the Chinese patent application No. 202311287497.5 filed with the CNIPA on September 27, 2023, which is incorporated by reference hereby in its entirety.

### TECHNICAL FIELD

The present disclosure relates to the field of communication power supplies.

### BACKGROUND

With the rapid development of the communication technology and the internet of things technology, operators and tower providers have higher and higher requirements on the intelligence level of communication power supplies, batteries and energy storage products. The existing networking modes between communication power supplies and batteries, between power supplies and field supervision units (FSUs), between power supplies and network management systems are relatively simple and fixed, and are difficult to meet the requirements of current multi-protocol and multi-link application scenarios.

### SUMMARY

An embodiment of the present disclosure further provides a protocol stack architecture, a protocol stack data processing method, an electronic device, and a storage medium.

In a first aspect, an embodiment of the present disclosure provides a protocol stack architecture, which may include: an application layer, a protocol layer, a parsing layer, and a link layer; wherein the application layer is configured to configure protocol information and/or link information and monitor data reception of the link layer; the protocol layer is configured to extract first valid data of a received data frame based on the registered protocol information, wherein the first valid data is data to be transmitted; the parsing layer is configured to parse the first valid data, and store and/or forward the parsed first valid data; and the link layer is configured to manage link control information of a communication link and receive data based on the configured link information.

In a second aspect, an embodiment of the present disclosure further provides a protocol stack data processing method based on the protocol stack architecture described above, wherein the method includes: configuring protocol information and/or link information by an application layer; monitoring whether data is received by a first communication link in the configured link information by the application layer; under the condition that data is received by the first communication link, reading an original data frame received by the first communication link through the link layer, and sending the original data frame to a protocol layer; extracting, by the protocol layer, first valid data in the original data frame based on the configured protocol information, and sending the first valid data to a parsing layer, wherein the first valid data is data to be transmitted; parsing, by the parsing layer, data content of the first valid data, and storing the parsed first valid data or forwarding the parsed first valid data through a second communication link in the link information.

In a third aspect, an embodiment of the present disclosure provides an electronic device, including: one or more processors; a memory having one or more programs stored thereon which, when executed by the one or more processors, cause the one or more processors to perform the protocol stack data processing method as described above; and one or more input/output I/O interfaces connected between the one or more processors and the memory and configured to enable information interaction between the one or more processors and the memory.

In a fourth aspect, an embodiment of the present disclosure provides a computer-readable storage medium having a computer program stored thereon which, the computer program, when executed by a processor, causes the protocol stack data processing method as described above to be implemented.

### BRIEF DESCRIPTION OF DRAWINGS

FIG. 1 is a block diagram of a protocol stack architecture according to an embodiment of the present disclosure;
FIG. 2 is a schematic diagram showing an embodiment of a configuration table according to an embodiment of the present disclosure;
FIG. 3 is a flowchart of a protocol stack data processing method according to an embodiment of the present disclosure;
FIG. 4 is a schematic diagram of a protocol stack data processing method according to an embodiment of the present disclosure;
FIG. 5 is a block diagram of an electronic device according to an embodiment of the present disclosure; and
FIG. 6 is a block diagram of a computer-readable storage medium according to an embodiment of the present disclosure.

### DETAIL DESCRIPTION OF EMBODIMENTS

To improve understanding of the technical solutions of the present disclosure for those skilled in the art, the protocol stack architecture, the protocol stack data processing method, the electronic device and the storage medium provided in the embodiments of the present disclosure will be described below in detail in conjunction with the accompanying drawings.

The present disclosure will be described more sufficiently below with reference to the accompanying drawings, where the illustrated embodiments may be embodied in different forms. However, the present disclosure should not be construed as being limited to the embodiments set forth herein. Rather, these embodiments are provided so that the present disclosure will be thorough and complete, and will fully convey the scope of the present disclosure to those skilled in the art.

Accompanying drawings are provided for further understanding of the embodiments of the present disclosure and constitute a part of the specification. Hereinafter, these drawings are intended to explain the present disclosure together with the detailed embodiments, but should not be considered as a limitation to the present disclosure. The above and other features and advantages will become more apparent to those skilled in the art by describing the detailed embodiments with reference to the accompanying drawings.

The present disclosure may be described with reference to plan and/or sectional views in idealized representations of the present disclosure. Accordingly, the example illustrations may be modified in accordance with the manufacturing process and/or the tolerance.

Embodiments of the present disclosure and features thereof may be combined with each other without conflict.

The terminology used herein is for the purpose of describing specific embodiments only and is not intended to limit the present disclosure. As used herein, the term "and/or" includes any and all combinations of one or more of the associated listed items. As used herein, the singular forms "a", "an" and "the" are intended to include the plural forms as well, unless the context clearly indicates otherwise. As used herein, the terms "comprise" and "consist of ..." specify the presence of the stated features, integers, steps, operations, elements, and/or components, but do not preclude the presence or addition of one or more other features, integers, steps, operations, elements, components, and/or groups thereof.

Unless otherwise defined, all terms (including technical and scientific terms) used in the present disclosure have the same meaning as commonly understood by one of ordinary skill in the art. It will be further understood that terms, such as those defined in commonly used dictionaries, should be interpreted as having a meaning that is consistent with their meaning in the context of the existing art and the present disclosure, and will not be interpreted in an idealized or overly formal sense unless expressly so defined in the present disclosure.

The present disclosure is not limited to the embodiments shown in the drawings, but includes modifications of configurations formed based on a manufacturing process. Therefore, the regions illustrated in the figures have schematic properties, and the shapes of the regions shown in the figures illustrate specific shapes of regions of elements, but are not intended to be limiting.

With the rapid development of the communication technology and the internet of things technology, operators and tower providers have higher and higher requirements on the intelligence level of communication power supplies, batteries and energy storage products. The existing networking modes between communication power supplies and batteries, between power supplies and field supervision units (FSUs), between power supplies and network management systems are relatively simple and fixed, such as the well-known serial port, controller area network (CAN) and wired internet protocol (IP) links, and when faced with the more complex working conditions of new products, such as master-slave management of a central supervision unit (CSU, a power management system software), integrated power parallel management, and selections of different customer protocols, the existing software framework cannot effectively meet these complex requirements. Moreover, for the same protocol, different networking modes are required to be connected to an external device due to the influence of the conditions on site, a typical scenario of which is the connection between a power supply and an energy network management system. In some on-site scenarios, a power supply performs 485 communication with a wireless master device, and power supply data is transmitted to a background network management system in the form of an IP through the wireless master device. However, if the field master device is not a self-developed product, the power supply is required to directly communicate with the network management system through the 4th generation communication technology (4G) wireless module or a wired network, while under the current protocol architecture, a 485 link is isolated from network link data, and two sets of same protocols need to be developed based on different links, which involves repeated manpower and time input, inundated custom versions, and continuously increased maintenance cost.

In summary, the original link-protocol binding manner cannot meet the current usage scenarios with complex power services and variable working conditions. In view of this, an embodiment of the present disclosure provides a lightweight protocol stack which implements layered isolation of a link layer, a protocol layer, a parsing layer, and an application layer for communication of a power supply product, so as to meet the networking scenarios of the unknown and increasingly variable power supply products.

In the embodiments of the present disclosure, a lightweight protocol stack is implemented by providing an application layer, a protocol layer, a parsing layer and a link layer which are layered independently and isolated from each other. Through different hierarchical functions of the application layer, the protocol layer, the parsing layer and the link layer in the protocol stack, the protocol stack has the advantages of clear hierarchy, high compatibility, intelligent management, high transportability and the like. Further, by configuring or registering protocol information and/or link information by the application layer in advance, different protocols and different communication links can be combined and configured at will, thereby implementing decoupling of the application protocol and the communication link. Therefore, the protocol stack can support compatibility with different hardware platforms, implement configuration -based management of protocols and hardware equipment resources, cope with application scenarios with variable protocols and links and the like, and reduce the maintenance cost.

The protocol stack architecture and the protocol stack data processing method provided in the embodiments of the present disclosure may be implemented by a terminal device, a server or any other electronic device that needs multi-protocol and multi-link data communication. The terminal device may include, but is not limited to, a vehiclemounted device, a user equipment (UE), a mobile device, a computing device, a wearable device, and the like, including, for example, but not limited to a cellular phone, a cordless phone, a personal digital assistant (PDA), a portable computer, and the like.

The protocol stack data processing method provided in the embodiments of the present disclosure maybe implemented by a processor calling computer-readable program instructions stored in a memory, or may be implemented by a server.

The solution provided in the embodiments of the present disclosure may be applied to, but is not limited to, power supply devices (such as communication power supply devices) and power conversion products derived from software and hardware of the power supply devices, for example, communication power supplies, communication batteries, communication energy storage products, photovoltaic inverter products, a mixed usage scenario of mutual communication thereof, and the like, and may be further applied to working conditions of integrated power supply parallel operation and lithium battery parallel operation.

The solution provided in the embodiments of the present disclosure is described in detail below.

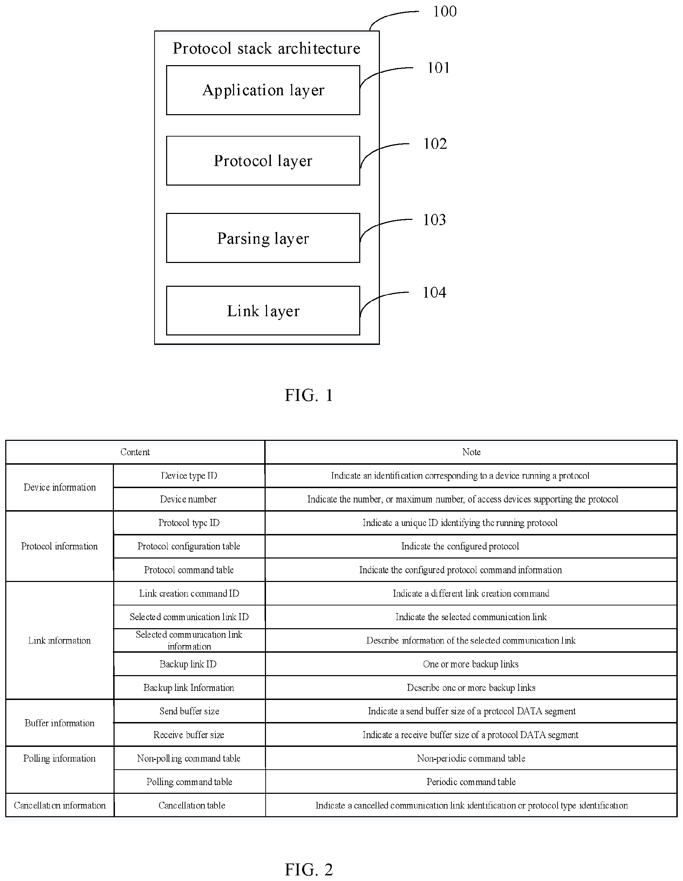

An embodiment of the present disclosure provides a protocol stack architecture 100, which, as shown in FIG. 1, may include: an application layer 101, a protocol layer 102, a parsing layer 103, and a link layer 104. The application layer 101, the protocol layer 102, the parsing layer 103 and the link layer 104 are layered independently and isolated from each other. The application layer 101 is configured to configure protocol information and/or link information and monitor data reception of a link layer. The protocol layer 102 is configured to extract first valid data of a received data frame based on the configured protocol information, where the first valid data is data to be transmitted. The parsing layer 103 is configured to parse the first valid data, and store and/or forward the parsed first valid data. The link layer 104 is configured to manage link control information of a communication link and receive data based on the configured link information.

In an embodiment of the present disclosure, the application layer 101 may be further configured to generate a response data packet under the condition of responding to the received data frame, and monitor data transmission of the link layer. The protocol layer 102 may be further configured to encapsulate a response data frame based on the configured protocol information and the response data packet. The parsing layer 103 may be further configured to encapsulate second valid data in a response based on the response data packet. The second valid data is data to be transmitted. The link layer 104 may be further configured to send data based on the configured link information.

This embodiment of the present disclosure provides a lightweight protocol stack system architecture which implements decoupling of software and hardware and decoupling of protocol and link, and has high compatibility and expandability, thereby meeting the requirements of intelligent management of communication device (e.g., power supply device) protocols, field flexible configuration, and quick response to demand changes. The protocol system architecture may include, but is not limited to, the four parts, i.e., the application layer, the protocol layer, the parsing layer, and the link layer, and functional features of each layer will be described in detail below.

In an embodiment of the present disclosure, the application layer 101 is further configured to: perform information interaction with a main program based on a heartbeat mechanism to maintain normal functions of the application layer.

In an embodiment of the present disclosure, configuring protocol information and/or link information by the application layer 101 may include: configuring, by the application layer before data transceiving, the protocol information and/or the link information based on a preset configuration table.

In an embodiment of the present disclosure, the application layer 101 may perform unified management on the protocol information and/or the link information through a configuration table, which includes, for example but not limited to registering, uninstalling and maintaining the protocol information and/or the link information through the configuration table.

In the embodiments of the present disclosure, considering various factors such as differences in the protocol frame structure, numerous interactive commands, and diverse communication links, and to adapt to flexible configuration of protocols and communication links in different application scenarios, the content of the protocol information and/or the link information may be configured as a unified template, such as the configuration table described above, based on which a user may fill field-required protocol information and link information into the configuration table to implement configuration of the protocol information and the link information, and establish one-to-one mapping of protocols and communication links and encapsulate the protocol commands, thereby implementing mixed combination of different protocols and links.

In an embodiment of the present disclosure, a filling interface may be provided in the configuration table, so that the user can fill the protocol information and the link information to be configured in the configuration table, and a selection interface may also be provided in the configuration table, so that various protocol information and link information can be maintained in the configuration table, and a configuration required by the user can be determined based on a selection of the user on the required protocol information and link information.

In an embodiment of the present disclosure, configuring protocol information and/or link information by the application layer 101 means that: in the case of only one protocol and various communication links, only the required link information may be configured in the configuration table; in the case of only one communication link and various protocols, only the required protocol information may be configured in the configuration table; and in the case of various protocols and various communication links, both the protocol information and the link information may be configured in the configuration table. In a detailed embodiment, the configuration table may be set as needed, and the detailed content of the configuration table is not limited here.

In an embodiment of the present disclosure, as shown in FIG. 2, the configuration table may include, but is not limited to, any one or more of: device information, the protocol information, the link information, buffer information, polling information, or cancellation information.

In an embodiment of the present disclosure, the device information may include, but is not limited to, any one or more of: a device type identification and/or the number of devices.

The protocol information may include, but is not limited to, any one or more of: a protocol type identification, a protocol configuration table, or a protocol command table. The protocol configuration table indicates the configured protocol, and the protocol command table indicates the configured protocol command information. The protocol command information includes a protocol command identification.

The link information may include, but is not limited to, any one or more of: a link creation command identification, a selected communication link identification, selected communication link information, a backup link identification, or backup link information.

The cancellation information may include, but is not limited to: a cancellation table. The cancellation table indicates a cancelled communication link identification and/or a cancelled protocol type identification.

The buffer information may include, but is not limited to: a send buffer size and/or a receive buffer size.

The polling information may include, but is not limited to: a non-polling command table and/or a polling command table.

In an embodiment of the present disclosure, the device type identification may indicate an identification corresponding to a device running a protocol (which may be compatible with a device type in a legacy protocol), and the number of devices may indicate the number, or maximum number, of access devices supporting the protocol.

In an embodiment of the present disclosure, the protocol type identification may indicate a unique identity (ID) identifying the running protocol, for example, A indicating a 1363 protocol, B indicating an underlying communication protocol, and so on.

In an embodiment of the present disclosure, the protocol configuration table may include, but is not limited to: a protocol entry (e.g., a CAN protocol, a cluster communication port (COM) protocol or a serial communication port (serial port), an IP protocol, etc.), a device number entry, and a base address entry.

In an embodiment of the present disclosure, the protocol command table may include: a command ID (i.e., the protocol command identification), a command type, a command header, a command tail, a command transmission mode, command execution success processing, command execution failure processing, and a command parsing entry (which may include, but is not limited to, command parsing, post-parsing processing, command encapsulation, and pre-encapsulation processing).

In an embodiment of the present disclosure, the link creation command identification indicates a different link creation command; the selected communication link identification indicates the selected communication link; the selected communication link information is used to describe information of the selected communication link; the backup link identification indicates one or more backup links; and the backup link information is used to describe one or more backup links.

In an embodiment of the present disclosure, the send buffer size indicates a send buffer size of a protocol DATA segment; and the receive buffer size indicates a receive buffer size of the protocol DATA segment.

In an embodiment of the present disclosure, the non-polling command table refers to a non-periodic command table, such as a table of parameter settings and control commands; while the polling command table refers to a periodic command table.

In an embodiment of the present disclosure, the cancellation table may indicate a cancelled communication link identification and/or a cancelled protocol type identification, for example: CAN1, CAN2, COM1, protocol 1, and the like.

In the embodiments of the present disclosure, based on the configuration table, protocols and communication links can be freely combined, and a mapping relationship between communication device webs (internet), or upper computer configuration protocols, and communication links can be reflected in a user operation manual.

In an embodiment of the present disclosure, the protocol layer 102 is configured to extract and encapsulate complete frames of data content of different protocols.

In an embodiment of the present disclosure, the protocol layer 102 is configured to determine and extract a frame (e.g., one frame) of valid data (i.e., data information that a user wants to transmit) from the received original data frame, and then transfer the frame of valid data to the parsing layer 103 for processing; or, completely package the data frame to be responded and transferred the packaged data frame to the link layer 104.

In an embodiment of the present disclosure, the extraction and package of a (e.g., one) complete data frame may differ greatly among different protocols, and the protocol layer 102 in the embodiment of the present disclosure has the functions of both fragmentation and reassembly of data packets, so that data extraction and package can be performed according to different protocols.

In an embodiment of the present disclosure, when the protocol configured in the configuration table is a protocol that is not currently supported, code development may be performed in the protocol layer to add a processing function of the protocol.

In an embodiment of the present disclosure, the parsing layer 103 has a key transition role in the protocol stack, and is mainly configured to parse and encapsulate the content of the first valid data in different protocols.

In an embodiment of the present disclosure, the parsing layer 103 may put the parsed first valid data into a specified memory or solidify the first valid data in a storage space, or parse the first valid data and then package and transmit the parsed first valid data to the protocol layer 102.

In an embodiment of the present disclosure, for different protocols, an executive program corresponding to the parsing layer may be abstractly interfaced (for example, set as a callable function, which can greatly reduce the work of recoding due to a change in the content of protocol data).

In an embodiment of the present disclosure, the link layer 104 is configured to manage link information of the communication device.

In an embodiment of the present disclosure, the communication device may include, but is not limited to, a communication power supply device, and the communication link of a power supply device may include, but is not limited to, any one or more of: a serial interface, a CAN interface, or a network interface. The network interface may include a wired network interface and/or a wireless network interface (e.g., including but not limited to wireless 4G, 5G, and/or wireless fidelity (WIFI)).

In the embodiment of the present disclosure, the link control information of the communication link may include, but is not limited to, any one or more of: link initialization configuration, link handle opening, link handle closing, and source data read/write functions.

In an embodiment of the present disclosure, executive programs of the application layer, the protocol layer, the parsing layer, and the link layer may be all functionalized to implement functions of the respectively layers in a function call manner.

In an embodiment of the present disclosure, by summarizing and analyzing the networking modes of communication devices and the communication modes with an external device, a software system framework and a protocol management scheme which support multiple links and multiple protocols that can be flexibly combined are provided, which greatly solves the problem of re-development of the protocol due to a link problem in the current communication device, such as a power supply product.

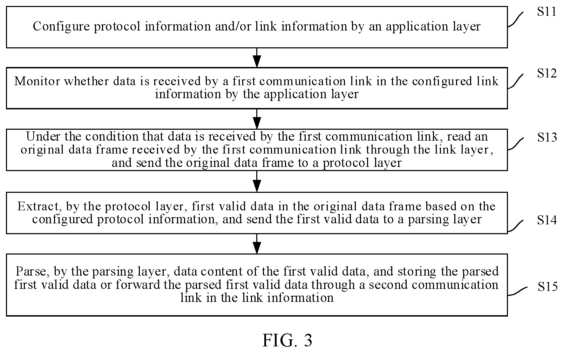

An embodiment of the present disclosure further provides a protocol stack data processing method based on the protocol stack architecture described above, where an executor of the method may be a control unit of any electronic device that needs multi-protocol and multi-link data communication, including, for example but not limited to, power supply devices (such as communication power supply devices), power conversion products derived from software and hardware of the power supply devices, and control units for integrated power supply parallel operation and lithium battery parallel operation. As shown in FIG. 3, the method may include the following operations S11 to S15.

At operation S11, configuring protocol information and/or link information by an application layer.

In an embodiment of the present disclosure, configuring protocol information and/or link information by the application layer may include: providing a preset configuration table by the application layer, and configuring the protocol information and/or the link information by acquiring protocol information and/or link information filled into the configuration table.

In an embodiment of the present disclosure, a preset configuration function may be used to call the configuration table for configuration of the protocol information and the link information, which is not described in detail here.

In an embodiment of the present disclosure, before performing the protocol stack data processing method provided in the embodiments of the present disclosure, corresponding hardware-level settings may be performed in advance based on the communication link to be configured, which includes, for example, connecting a corresponding communication link interface, setting corresponding hardware parameters, and the like.

In an embodiment of the present disclosure, an embodiment of the hardware-level settings is given below. Since the site control unit (SCU, including software and hardware) product is provided with an RS485 serial port COM0, a CAN0 communication port and a wired network port LANO at the same time, the solution provided in the embodiments of the present disclosure may be explained based on the SCU, and a computer (e.g., an upper computer), an RS485 communication cable, a CAN box and a network cable may be prepared.

In an embodiment of the present disclosure, when the SCU is powered on to operate, a mapping relationship between a protocol A and the serial port COM0 may be configured in the configuration table. Two ends of the RS485 cable are connected to the COM0 of the SCU and the computer (e.g., the upper computer) respectively. A serial port assistant parameter of the computer is set to be consistent with the COM0. A serial port assistant tool is started, and an analog quantity query command of the protocol A is sent by the computer. The serial port assistant tool of the computer may receive a response data frame from the SCU.

In an embodiment of the present disclosure, while the protocol A remains unchanged, if the communication link is modified to be connected to the CAN0 communication port, the mapping relationship in the configuration table is modified to a mapping relationship between the protocol A and the CAN0. Two ends of the CAN box cable are connected to the CAN0 port of the SCU and the computer (e.g., upper computer), respectively. CAN upper computer software of the computer is started, and an analog quantity query command of the protocol A is sent. The CAN upper computer software of the computer may receive a response data frame of the SCU.

In an embodiment of the present disclosure, if the protocol A is changed to a protocol B, and the communication link is modified to be connected to the LANO port, the mapping relationship in the configuration table is modified to a mapping relationship between the protocol B and the LANO. Two ends of the network cable are connected to the LANO port of the SCU and a network interface of the computer (e.g., upper computer), respectively. A static IP of the computer is set to the same network segment as a network port IP of the SCU. A transmission control protocol (TCP) assistant is started on the computer, and set to a client mode to establish a socket link with an SCU server. The TCP assistant sends an analog quantity query command of the protocol B, and may receive a response data frame of the SCU.

In an embodiment of the present disclosure, the above are merely embodiments of SCU based scenarios, and the protocol stack architecture and the corresponding data processing method provided in the embodiments of the present disclosure may be applied to any communication device, such as a power supply device, and may be applied to a management unit of the communication device. In the case of hardware connection, a communication link of the communication device may be connected to a communication link of a target device to be communicated. For example, a power supply device is connected to an upper computer.

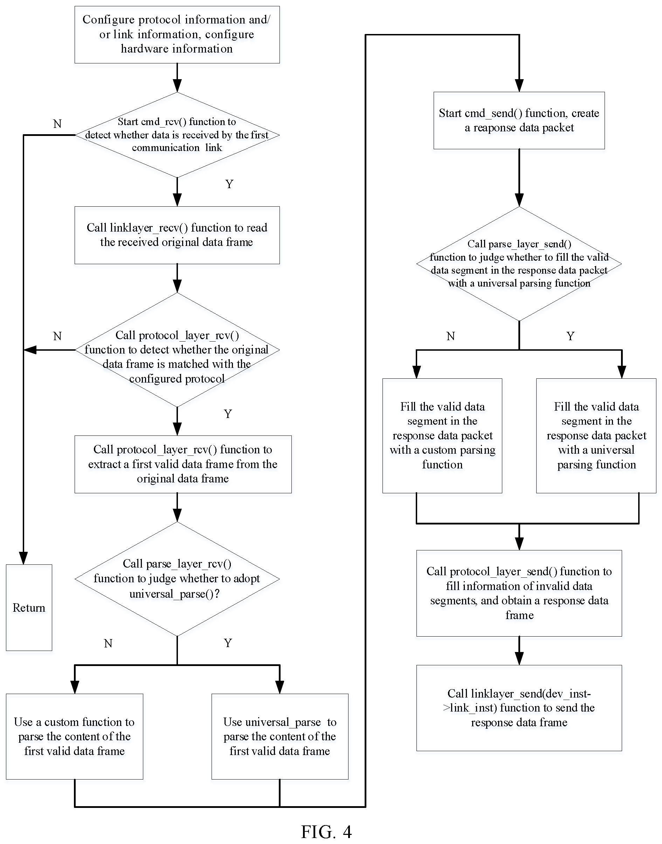

In an embodiment of the present disclosure, as shown in FIG. 4 in conjunction with FIG. 3, the detailed data transceiving process based on the above settings may be as follows.

At operation S12, monitoring whether data is received by a first communication link in the configured link information by the application layer.

In an embodiment of the present disclosure, a receive function, such as a cmd_rev(dev_inst,cmd_buff) function, may be set in advance in the application layer, through which it may be detected whether data is received by the first communication link to which a detection parameter dev_inst is bound.

In an embodiment of the present disclosure, in a case where the configuration table is configured to implement communicate through the first communication link (which may be any communication link), it may be detected whether data is received by the first communication link.

At operation S13, under the condition that data is received by the first communication link, reading an original data frame received by the first communication link through the link layer, and sending the original data frame to a protocol layer.

In an embodiment of the present disclosure, a link layer receive function, such as linklayer_recv(dev_inst->link_inst), may be set in advance in the link layer, where dev_inst->link_inst indicates that a detection parameter dev_inst is bound to a communication link link_inst (serving as the first communication link). The link layer receive function may be called by the application layer, so that the link layer receive function reads an original data frame received by the bound communication link, and sends the original data frame to the protocol layer.

At operation S14, extracting, by the protocol layer, first valid data in the original data frame based on the configured protocol information, and sending the first valid data to a parsing layer.

In an embodiment of the present disclosure, the first valid data is data to be transmitted.

In an embodiment of the present disclosure, before extracting first valid data in the original data frame by the protocol layer, the method may further include: querying, by the protocol layer based on a protocol type identification configured in the configuration table, a first parsing function matched with the protocol type identification; and detecting, by the protocol layer, integrity of the original data frame according to the first parsing function.

In an embodiment of the present disclosure, a protocol layer receive function, such as protocol_layer_rev(dev_inst, cmd_buff), may be set in advance in the protocol layer. The protocol layer receive function may be called by the application layer, so that the protocol layer receive function query a matched first parsing function based on a protocol corresponding to a protocol type identification recorded in the detection parameter dev_inst. The first parsing function may judge whether the received original data frame is complete. If the original data frame is complete, it indicates that the original data frame is matched with the protocol corresponding to the protocol type identification. If the original data frame is not complete, it indicates that the original data frame is not matched with the protocol corresponding to the protocol type identification.

In an embodiment of the present disclosure, the configured protocol information includes a protocol command identification. Extracting, by the protocol layer, first valid data in the original data frame based on the configured protocol information, and sending the first valid data to the parsing layer includes: determining a configured protocol based on the protocol command identification; extracting, according to the protocol, a complete data frame of the first valid data from the original data frame; and sending the complete data frame of the first valid data to the parsing layer along with the protocol command identification.

In an embodiment of the present disclosure, a cmd_buff parameter may record a protocol command identification, based on which a first valid data frame is extracted and sent to the parsing layer along with the protocol command identification for later use by the parsing layer.

At operation S15, parsing, by the parsing layer, data content of the first valid data, and storing the parsed first valid data or forwarding the parsed first valid data through a second communication link in the link information.

In an embodiment of the present disclosure, a parsing layer receive function, such as parse_layer_rcv(dev_inst,cmd_buff), may be set in advance in the parsing layer. The parsing layer receive function may be called by the application layer to parse content of the first valid data.

In an embodiment of the present disclosure, parsing, by the parsing layer, data content of the first valid data may include: judging, by the parsing layer, whether a second parsing function associated with the protocol command identification is a custom function based on the protocol command identification; under the condition that the second parsing function is not a custom function, calling the second parsing function from a preset universal parsing function set, or under the condition that the second parsing function is a custom function, calling the second parsing function from a preset custom parsing function set; and performing content parsing on data segments corresponding to the protocol command identification in the data frame of the first valid data one by one with the called second parsing function.

In an embodiment of the present disclosure, the parsing layer receive function parse_layer_rcv(dev_inst,cmd_buff) is called; and it is judged whether a parsing function (such as the second parsing function) associated with a protocol command identification recorded in cmd_buff is custom. If the function is custom, a custom function is used to parse the content of the first valid data frame. If the function is not custom, it is determined that the second parsing function is a universal parsing function universal_parse() which may be executed. For example, a data parsing function parse_data() in the universal parsing function may be used to complete content parsing on data segments corresponding to the protocol command identification in the data frame of the first valid data one by one (where the protocol command identification may be reflected in the configuration table of the application layer, and the data segment content corresponding to the protocol command identification may include data segment information related to the protocol command identification, an order, a size, and the like), thereby implementing the parsing of the first valid data.

In an embodiment of the present disclosure, the parsing layer may store or forward the parsed first valid data. At this point, the data receiving process of the protocol stack according to the embodiments of the present disclosure is ended.

In an embodiment of the present disclosure, after storing the parsed first valid data or forwarding the valid data through a second communication link configured in the link layer, the method may further include: creating, by the application layer, a response data packet including a plurality of data segments; filling, by the parsing layer based on the protocol information, data information of second valid data into a data segment corresponding to the parsing layer, and filling, by the protocol layer based on the protocol information, non-data information into a data segment corresponding to the protocol layer to obtain a response data frame, where the second valid data is data to be transmitted; and sending the response data frame by the link layer based on the first communication link to respond to received data.

In an embodiment of the present disclosure, the plurality of data segments may include a valid data segment and a non-valid data segment.

In an embodiment of the present disclosure, a processing flow of a response frame is opposite to the receiving process, where a send function, such as a cmd_send() type function, may be set in advance in the application layer, package of response data is started by starting the send function, and a response data packet may be created through the send function and sent to the parsing layer.

In an embodiment of the present disclosure, a parsing layer send function, such as parse_layer_send(), may be set in advance in the parsing layer. The parsing layer send function parse_layer_send() may be called by the application layer, so that the parsing layer send function fills the content of the valid data segment in the response data packet according to the configured protocol based on the protocol command identification transferred before, thereby achieving a general or custom packet.

In an embodiment of the present disclosure, the parse_layer_send() function may be called to judge, based on the protocol command identification, whether to fill the valid data segment in the response data packet with a universal parsing function. If it is determined to fill the valid data segment in the response data packet with a universal parsing function, the valid data segment in the response data packet is filled with the universal parsing function. If it is determined not to fill the valid data segment in the response data packet with a universal parsing function, the valid data segment in the response data packet is filled with a custom parsing function.

In an embodiment of the present disclosure, a protocol layer send function, such as protocol_layer_send(), may be set in advance in the protocol layer. On the basis of the response data packet of the application layer, the protocol layer send function may complete filling of the content of the invalid data segment in the response data packet, pack a complete frame of data, and obtain a response data frame to be sent to the link layer.

In an embodiment of the present disclosure, a link layer send function, such as linklayer_send(dev_inst->link_inst), may be set in advance in the link layer, where a complete response data frame is sent based on the link information transferred by an input parameter dev_inst.

The embodiments of the present disclosure solve the current chaotic situations of inundated custom versions, disordered protocol management, and failure to meet the intelligent requirements due to the fact that protocols are bound with links in the existing power supply products and protocol development is only increased but not reduced, and the embodiments of the present disclosure has at least the following beneficial effects:
1. Protocols and communication links are completely decoupled, to adapt to different application scenarios and implement diversified the solutions.
2. The supported protocols may be dynamically loaded and uninstalled based on needs, and thereby significantly shortening the conventional re-issuing process of a protocol version.
3. The current situation of inundated software branches can be greatly improved, and the maintenance cost can be reduced.
4. A communication device (e.g., a power supply device) parallel operation scenario can be seamlessly butted, thereby meeting the increasing differentiation requirements.
5. The protocol stack has high compatibility and can be seamlessly transplanted to other hardware environments.
6. Compared with the conventional solutions, the development time and labor input for adding a new protocol are reduced by more than 30%.

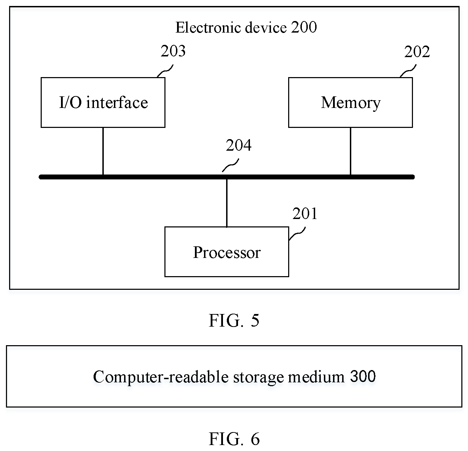

An embodiment of the present disclosure further provides an electronic device 200 which, as shown in FIG. 5, includes: one or more processors 201; a memory 202 having one or more programs stored thereon which, when executed by the one or more processors 201, cause the one or more processors 201 to perform the protocol stack data processing method as described above; and one or more input/output I/O interfaces 203 connected between the one or more processors 201 and the memory 202 and configured to enable information interaction between the one or more processors 201 and the memory 202.

The processor 201 is a device with a data processing capability, including but not limited to a central processing unit (CPU), or the like; The memory 202 is a device with a data storage capability, including but not limited to, a random access memory (RAM, more specifically SDRAM, DDR, etc.), a read-only memory (ROM), an electrically erasable programmable read-only memory (EEPROM) or a flash memory (FLASH). The I/O interface (read/write interface) 203 is connected between the processor 201 and the memory 202 to enable information interaction between the processor 201 and the memory 202, and includes, but is not limited to, a data bus or the like.

In some embodiments, the processor 201, the memory 202, and the I/O interface 203 are interconnected via a bus 204, and further connected to other components of a computing device.

In an embodiment of the present disclosure, the electronic device may include, but is not limited to, a power supply device, such as a communication power supply device.

An embodiment of the present disclosure further provides a computer-readable storage medium 300 which, as shown in FIG. 6, has a computer program stored thereon which, when executed by a processor, causes the protocol stack data processing method as described above to be implemented.

Those of ordinary skill in the art will appreciate that all or some operations function modules/units in the and disclosed above may be implemented as software firmware, hardware, and suitable combinations thereof.

In a hardware implementation, the division between the function modules/units mentioned in the above description does not necessarily correspond to the division of physical components; for example, one physical component may have multiple functions, or one function or operation may be performed cooperatively by several physical components.

Some or all physical components may be implemented as software executed by a processor, such as a central processing unit (CPU), a digital signal processor or microprocessor, or implemented as hardware, or implemented as an integrated circuit, such as an application specific integrated circuit. Such software may be distributed on a computer-readable medium which may include a computer storage medium (or nontransitory medium) and a communication medium (or transitory medium). As is well known to those of ordinary skill in the art, the term computer storage medium includes volatile and nonvolatile, removable and non-removable media implemented in any method or technology for storing information, such as computer-readable instructions, data structures, program modules or other data. The computer storage medium includes, but is not limited to, a random access memory (RAM, more specifically SDRAM, DDR, etc.), a read only memory (ROM), an electrically erasable programmable read-only memory (EEPROM), a flash memory (FLASH), or other disk storage; a compact disk read-only memory (CD-ROM), a digital versatile disk (DVD), or other optical disk storage; a magnetic cassette, a magnetic tape, a magnetic disk memory or any other magnetic storage; or any other medium which can be used to store the desired information and accessed by a computer. Moreover, it is well known to those of ordinary skill in the art that a communication medium typically includes a computer readable instruction, a data structure, a program module, or other data in a modulated data signal, such as a carrier wave or other transport mechanism, and may include any information delivery medium.

The present disclosure has disclosed exemplary embodiments, and although specific terms are employed, they are used and should be interpreted merely in a generic and descriptive sense, not for purposes of limitation. In some instances, as would be apparent to one skilled in the art, features, characteristics and/or elements described in connection with a particular embodiment may be used alone or in combination with features, characteristics and/or elements described in connection with another embodiment, unless expressly stated otherwise. It will, therefore, be understood by those skilled in the art that various changes in form and details may be made therein without departing from the scope of the present disclosure as set forth in the appended claims.

## Claims

1. A protocol stack architecture, comprising: an application layer, a protocol layer, a parsing layer, and a link layer; wherein the application layer, the protocol layer, the parsing layer and the link layer are layered independently and isolated from each other;
the application layer is configured to configure protocol information and/or link information and monitor data reception of the link layer;
the protocol layer is configured to extract first valid data of a received data frame based on the configured protocol information, wherein the first valid data is data to be transmitted;
the parsing layer is configured to parse the first valid data, and store and/or forward the parsed first valid data; and
the link layer is configured to manage link control information of a communication link and receive data based on the configured link information.

2. The protocol stack architecture according to claim 1, wherein configuring protocol information and/or link information by the application layer comprises:
configuring, by the application layer before data transceiving, the protocol information and/or the link information based on a preset configuration table.

3. The protocol stack architecture according to claim 2, wherein the configuration table comprises any one or more of: device information, the protocol information, the link information, buffer information, polling information, or cancellation information.

4. The protocol stack architecture according to claim 3, wherein
the device information comprises any one or more of: a device type identification and/or a number of devices;
the protocol information comprises any one or more of: a protocol type identification, a protocol configuration table, or a protocol command table; the protocol configuration table indicates a configured protocol, the protocol command table indicates configured protocol command information, and the protocol command information comprises a protocol command identification;
the link information comprises any one or more of: a link creation command identification, a selected communication link identification, selected communication link information, a backup link identification, or backup link information;
the cancellation information comprises: a cancellation table, wherein the cancellation table indicates a cancelled communication link identification and/or a cancelled protocol type identification;
the buffer information comprises: a send buffer size and/or a receive buffer size; and
the polling information comprises: a non-polling command table and/or a polling command table.

5. The protocol stack architecture according to any one of claims 1 to 4, wherein the communication link comprises any one or more of: a serial interface, a controller area network, CAN, interface, or a network interface; and
the link control information comprises any one or more of: link initialization configuration, link handle opening, link handle closing, or source data read/write functions.

6. The protocol stack architecture according to any one of claims 1 to 4, wherein
the application layer is further configured to generate a response data packet under the condition of responding to the received data frame, and monitor data transmission of the link layer;
the protocol layer is further configured to encapsulate a response data frame based on the configured protocol information and the response data packet;
the parsing layer is further configured to encapsulate second valid data in a response based on the response data packet, wherein the second valid data is data to be transmitted;
the link layer is further configured to send data based on the configured link information.

7. The protocol stack architecture according to any one of claims 1 to 4, wherein the application layer is further configured to: perform information interaction with a preset main program based on a heartbeat mechanism to maintain normal functions of the application layer.

8. A protocol stack data processing method based on the protocol stack architecture according to any one of claims 1 to 7, wherein the method comprises:
configuring protocol information and/or link information by an application layer;
monitoring whether data is received by a first communication link in the configured link information by the application layer;
under the condition that data is received by the first communication link, reading an original data frame received by the first communication link through the link layer, and sending the original data frame to a protocol layer;
extracting, by the protocol layer, first valid data in the original data frame based on the configured protocol information, and sending the first valid data to a parsing layer, wherein the first valid data is data to be transmitted;
parsing, by the parsing layer, data content of the first valid data, and storing the parsed first valid data or forwarding the parsed first valid data through a second communication link in the link information.

9. The protocol stack data processing method according to claim 8, wherein configuring protocol information and/or link information by the application layer comprises:
providing a preset configuration table by the application layer, and configuring the protocol information and/or the link information by acquiring protocol information and/or link information filled in the configuration table.

10. The protocol stack data processing method according to claim 8, wherein before extracting first valid data in the original data frame by the protocol layer, the method further comprises:
querying, by the protocol layer based on a protocol type identification configured in a configuration table, a first parsing function matched with the protocol type identification; and
detecting, by the protocol layer, integrity of the original data frame according to the first parsing function.

11. The protocol stack data processing method according to claim 8, wherein the protocol information comprises a protocol command identification; extracting, by the protocol layer, first valid data in the original data frame based on the configured protocol information, and sending the first valid data to the parsing layer comprises:
determining a configured protocol based on the protocol command identification;
extracting, according to the protocol, a complete data frame of the first valid data from the original data frame; and
sending the complete data frame of the first valid data to the parsing layer along with the protocol command identification.

12. The protocol stack data processing method according to claim 11, wherein parsing, by the parsing layer, data content of the first valid data comprises:
judging, by the parsing layer, whether a second parsing function associated with the protocol command identification is a custom function based on the protocol command identification;
under the condition that the second parsing function is not a custom function, calling the second parsing function from a preset universal parsing function set, or under the condition that the second parsing function is a custom function, calling the second parsing function from a preset custom parsing function set; and
performing content parsing on data segments corresponding to the protocol command identification in the data frame of the first valid data one by one with the called second parsing function.

13. The protocol stack data processing method according to claim 8, wherein after storing the parsed first valid data or forwarding the parsed first valid data through a second communication link configured in the link layer, the method further comprises:
creating, by the application layer, a response data packet comprising a plurality of data segments;
filling, by the parsing layer based on the protocol information, data information of second valid data into a data segment corresponding to the parsing layer, and filling, by the protocol layer based on the protocol information, non-data information into a data segment corresponding to the protocol layer to obtain a response data frame, wherein the second valid data is data to be transmitted; and
sending the response data frame by the link layer based on the first communication link to respond to received data.

14. An electronic device, comprising:
one or more processors;
a memory having one or more programs stored thereon which, when executed by the one or more processors, cause the one or more processors to implement the protocol stack data processing method according to any one of claims 8 to 13; and
one or more input/output I/O interfaces connected between the one or more processors and the memory and configured to enable information interaction between the one or more processors and the memory.

15. A computer-readable storage medium having a computer program stored thereon which, when executed by a processor, causes the protocol stack data processing method according to any one of claims 8 to 13 to be implemented.
